# EUROPEAN PATENT APPLICATION

(11) **EP 4 183 852 A1**
(43) Date of publication of application: **24.05.2023**
(21) Application number: 21425056.5
(22) Date of filing: 17.11.2021
(51) Int. Cl.: C09K 11/02, C03C 12/02, C09D 5/22, D02J 3/18

(54) **PHOTOLUMINESCENT - PHOTOREFLECTIVE MATERIAL FOR HIGH VISIBILITY**

(71) Applicant: Rivellini, Alex Ivano, 20881 Bernareggio (MB) (IT); Rivellini, Carlo Mario, 20093 Cologno Monzese (MI) (IT)
(72) Inventor: Rivellini, Alex Ivano, 20881 BERNAREGGIO (MB) (IT); Rivellini, Carlo Mario, 20093 COLOGNO MONZESE (MI) (IT)

(57) **Abstract**

The present invention is achieved in the physic-chemical composition of a material being at the same time photoluminescent and photoreflective charateristics, G02 class, bearing simultaneously the characteristics of the two fields of application present in the same material realized in a set mixing percentage; the photoluminescent photoreflective material achieved is a physic-chemical compound able to absorb light in the presence of direct and/or indirect incident light of the whole spectrum and then give it back according to the principle of photoluminescence, and simultaneously able to give back the light received during the lighting period, according to the principle of photoreflective materials.

These characteristics make the compound photoluminescent and photoreflective at the same time, imparting the substrate on which it is applied and/or of which it is made, characteristics of visibility both with or without the presence of light.

## Description

The present compound relates to the field of materials possessing both photoluminescent and photoreflective optical characteristics at a time, product class G02, bearing simultaneously the characteristics of the two fields of application present in the same material.

At present the industrial use of photoluminescence is employed independently from photoreflection, both used in the field of security and to make visualization of objects easier.

Existing applications that use the optical propertiy of photoreflection are, for instance, in the field of road signs, high-visibility clothing, the production of glittering dresses, for particularly sparkling fabric, etc.

Existing applications that use the optical property of photoluminescence are, for instance, in the field of safety exit signs on airplanes, in the production of fluorescent labels, in design.

There is no evidence of simultaneous applications having the characteristics described above.

The present photoluminescent-photoreflective material has been expressly conceived to solve the problem arising from those applications in which the photoreflective effect does not guarantee the visibility of the object unless it is hit by an incident light ray as well as the problem arising from those applications in which the photoluminescent effect does not guarantee the visibility of the object in case it is hit by an incident light ray, generally in the absence of light.

In fact, photoreflection is effective and makes the object visible only with the presence of incident light, whereas photoluminescence is set to zero in the presence of incident light; conversely, photoluminescence is effective and makes the object visible with no incident ray, while photoreflection is not effective in the absence of incident light.

The purpose of the present invention is to solve both abovementioned shortcomings in order to make the object with characteristics of the invention always visible both in the presence of incident light and in the absence of light.

Appropriately, the compound can be applied to the surface of an object by means of deposition, bonding, painting, inking, application, mixing and participation. Advantageously, the compound can be added in matrix, or on applicable materials, as well as in yarn, in the weft, in the warp, with adhesive or anyway applied within the object or on the desired object.

Particularly, the compound keeps the characteristics of the object on which it is applied or in which it participates, thereby allowing its use also with products that require such characteristics, such as fabrics, plastic materials, varnishes, paints, inks, glues, adhesives and stickers, paper, cardboard, flexible and foldable materials in general.

The compound can be used as additive and added, for instance, in matrix to injectable plastic materials thus imparting its own optical characteristics, for example using the compound as colouring pigment according to the process of injection of plastic materials in a 0,03 to 65% ratio of compound in the finished product, or mixed in paste for plastic materials in a 0,03 to 65% ratio of compound in the finished product; it can be added as additive to varnish or paint mixing the compound with varnish or paint itself in a 0,03 to 65% ratio of compound in the final product and then deposited with the varnish or the paint itself on the surfaces to be treated thus imparting its own optical characteristics; it can be used as additive to glues and/or adhesives, for example making paste for adhesives in a 0,03 to 65% ratio of compound in the finished product (glue plus colouring paste) and/or directly mixed with glues and/or adhesives in a 0,03 to 65% ratio of compound in the finished product.

The compound can be used as additive and inserted, for instance, in mortar and/or cement and/or similar materials in a 0.03 to 65% ratio of compound in the finished product, thus imparting to mortars and/or cement and/or similar materials its own characteristics; it can be used as pigment in inks and/or similar materials by adding to inks and/or similar materials in a 0,03 to 65% ratio of compound in the finished product.

The compound can be realised in the form of a layer e.g. for lamination with the possible addition of a binder, which allows the processing, in a 0,03 to 98% ratio of compound in the finished product.

The mixing of the compound with different materials can take place both through dry and wet mixing, respecting the percentages of the compound.

The compound can adhere to yarns, cloth, fabrics such as cotton, silk, wool, synthetic fabrics, or to sheets, blocks of different materials, such as paper, cardboard, cements. plastic materials e.g. applied on yarns of synthetic material and/or later used in the weft and/or in the warp for the production of fabrics that acquire the photoluminescent/photoreflective characteristics of the invention.

With respect to its characteristics, the invention has been realised by the composition of substances, of which at least one possessing photoluminescent characteristics, and a second one possessing photorefractive characteristics, in a 0,03% to 40% ratio of photoluminescent material/s: photoreflective material/s will therefore come out as balance to 100.

The compound is achieved by dry mixing or wet mixing of at least two components, of which the first one possessing photoreflective characteristics, for example in the form of microspheres with a diameter measurable between 10:110 microns, e.g. highly reflective glass microspheres, or micro-prism with photoreflective characteristics with a diameter between 10:130 microns and the second one possessing the characteristics of photoluminescent powder with a grain size ranging from 1 to 130 micron, such as for example powders of rare-earth elements like strontium or europium aluminate or carbonate, zinc sulphide or similar.

You can mix for exemple a photoluminescent blu material (as Lumilux 50034 Honeywell) 65 micron size, 35% quantity, with microspheres photoreflective (as Aprochimide) in a 60 micron size 65% quantity, having therefore the desired effect of a compound at the same time photoluminescent and photoreflective: mixing the compound for exemple into varnish or paint, that varnish or paint becomes at the same photoluminescent and photoreflective.

You can mix for exemple a photoluminescent red material (as Lumilux 50037 Honeywell) 40 micron size, 32% quantity, with microprism photoreflective in a 40 micron size 68% quantity, having therefore the desired effect of a compound at the same time photoluminescent and photoreflective.

You can mix for exemple a photoluminescent yellow material (as Lumilux 50070 Honeywell) 4,1 g/cm³ density 30% quantity, with microspheres photoreflective (as Aprochimide) in a 50 micron size 70% quantity, having therefore the desired effect of a compound at the same time photoluminescent and photoreflective: the compound can be used for exemple applied on woven in yarn, or merged, that woven becomes at the same time photoluminescent and photoreflective.

You can mix for exemple a photoluminescent green material (as Lumilux 50081 Honeywell) 38 micron size, 28% quantity, with microspheres photoreflective (as Aprochimide) in a 55 micron size 72% quantity, having therefore the desired effect of a compound at the same time photoluminescent and photoreflective

In the case of wet mixing, it will be necessary to use non-polar solvents or weakly polar solvents such as for example acetone, dihydrocarbons or other.

The substances constituting the physic-chemical mixture will have characteristics related to DIN 67510 standard, thus providing said specifications of visibility to the compound in conditions of absence of light, as well as related to EN 1436, EN 1790, EN 471 standards and others rules governing the reflectivity of products, thus imparting such specifications of visibility to the invention.

On the basis of the above it can thus be seen that the compound realised as described above achieves the objective set that is to make an object visible also in conditions of absence of light or likewise to make it visible in the presence of incident light, thus making it always visible even in the absence of daylight.

## Claims

1. Composition material possessing photoluminescent and photoreflective optical characteristics including:
- At least one material possessing photoluminescent characteristics like, for example, powders of rare-earth elements such as strontium aluminate or strontium carbonate or europium or zinc sulphide or others, with a size ranging from 1 to 130 micron,
- At least a second material possessing photoreflective characteristics like, for example, highly reflective glass microspheres in the 10-110 micron range, or highly reflective micro-prism in the 10 -120 micron range
whose combination has to be achieved in a 0,03% to 40% ratio between photoluminescent material and total compound, for example through dry or wet mixing, the rest to 100 % is made of the photoreflecteve material;

2. Composition material possessing photoluminescent and photoreflective optical characteristics according to claim 1, wherein said composition is added in matrix to another material like, for example, in the masterbatch of plastic materials as plastic dye, or as gel matrix, or as paste for plastic materials, in a 0,03 to 65% ratio between compound and finished product, thus imparting its own photoluminescent/photoreflective characteristics and visibility to it;

3. Use of the composition material possessing photoluminescent and photorefractive optical characteristics according to claim 1 and 2, wherein said composition is realised in the form of a layer e.g. for lamination with a binder, if necessary, mixed in a 0,03 to 98% ratio between compound and finished product, which can be added to other materials, thus imparting its own photoluminescent/photoreflective characteristics and visibility to it;

4. Use of the composition material possessing photoluminescent and photoreflective optical characteristics according to claim 1 and 2, wherein said composition is mixed with paint or with water-based paint in a 0,03 to 65% ratio between compound and finished product, thus imparting its own photoluminescent/photoreflective characteristics and visibility to the paint or water-based paint;

5. Use of the composition material possessing photoluminescent and photoreflective optical characteristics according to claim 1, wherein said composition is applied on yarn, that is embedded, included and/or dipped into another spinnable material, thus imparting its own photoluminescent/photoreflective characteristics and visibility to it;

6. Use of the composition material possessing photoluminescent and photoreflective optical characteristics according to claim 1 and 5, wherein said composition is inserted in the yarn, in the weft and/or in the warp of another material, thus imparting its own photoluminescent/photoreflective characteristics and visibility to it;

7. Use of the composition material possessing photoluminescent and photoreflective optical characteristics according to claim 1, wherein said composition is mixed with glue or adhesive in a 0,03 to 65% ratio between the compound and the finished product, thus imparting its own photoluminescent/photoreflective characteristics and visibility to it;

8. Use of the composition material possessing photoluminescent and photoreflective optical characteristics according to claim 1, wherein said composition is mixed with mortar and/or cement and/or similar materials in a 0,03 to 65% ratio between the compound and the finished product, thus conferring its own photoluminescent/photoreflective characteristics and visibility to it;

9. Use of the composition material possessing photoluminescent and photoreflective optical characteristics according to claim 1. wherein said composition is mixed with inks and/or similar materials in a 0,03 to 65% ratio between the compound and the finished product, thus imparting its own photoluminescent/photoreflective characteristics and visibility to it;
